# EUROPÄISCHE PATENTSCHRIFT

(11) **EP 1 553 863 B1**
(45) Veröffentlichungstag und Bekanntmachung des Hinweises auf die Patenterteilung: **24.12.2008**
(21) Anmeldenummer: 03757955.4
(22) Anmeldetag: 10.10.2003
(51) Int. Cl.: A47J 37/06, H05B 6/12

(54) **MEHRZWECKARBEITSPLATTE F R EINEN HERD ODER GRILL**
MULTIPURPOSE WORK TOP FOR COOKER OR GRILL
PLANCHE DE TRAVAIL POLYVALENTE POUR CUISINIERE OU BARBECUE

(30) Priorität: 17.10.2002 DE 20215979 U
(43) Veröffentlichungstag der Anmeldung: 20.07.2005
(73) Patentinhaber: Eisfink Max Maier GmbH & Co. KG, 71636 LUDWIGSBURG (DE)
(72) Erfinder: MAIER, Max, 71636 Ludwigsburg (DE)
(74) Vertreter: Menges, Rolf
(86) Internationale Anmeldenummer: PCT/EP2003/011266
(87) Internationale Veröffentlichungsnummer: WO 2004/034858

(56) Entgegenhaltungen:
- DE-A- 19 617 147
- DE-U- 9 420 656
- DE-U- 20 116 711
- PATENT ABSTRACTS OF JAPAN vol. 1997, no. 05, 30. Mai 1997 (1997-05-30) & JP 09 000435 A (REBIYUU:KK), 7. Januar 1997 (1997-01-07)

## Beschreibung

Die Erfindung betrifft eine Mehrzweckarbeitsplatte nach dem Oberbegriff des Patentanspruchs 1.

Eine solche Mehrzweckarbeitsplatte ist aus dem Dokument DE 94 20 656 U bekannt. Sie umfasst eine einschichtige Platte aus Edelstahl, welche eine elektrisch beheizbare Unterseite aufweist, die mit mehreren flexiblen Heizmatten versehen ist, durch die mehrere begrenzte Arbeitsbereiche gebildet sind, welche durch Grenzzonen getrennt sind. Die Grenzzonen sind gebildet durch Zonen, wo unter der Platte keine weitere Heizmatte befestigt ist.

Gegenstand des auf die Anmelderin zurückgehenden, nicht vorveröffentlichten Dokuments DE 202 14 322 U ist eine metallische Grillplatte, die eine Mehrschichtplatte der hier in Rede stehenden Art aufweist, von der zumindest die oberste Schicht aus Blech besteht und von der zumindest an einem Rand die Schichten unterhalb der obersten Schicht nicht vorhanden sind und die oberste Schicht abgebogen ist, um eine Fettauslauframpe zu bilden. Dieser ältere Vorschlag der Anmelderin beschränkt sich somit auf eine metallische Grillplatte, bei der die oberste Schicht der Mehrschichtplatte am Rand abgebogen ist. Der abgebogene Teil und dessen Randbereich können sich dabei ringsum die Grillplatte erstrecken. Diese kann somit leicht in einem Gehäuse montiert werden, indem der Rand auf einen entsprechenden Gegenhalter an dem Gehäuse aufgelegt wird. Eine solche metallische Grillplatte findet insbesondere Anwendung als Induktionsgrillplatte.

In der Gastronomie ist ein Flächengrill oder Teppan-Yaki bekannt. Heute ist Teppankochen in Restaurants eines der großen kulinarischen Erlebnisse für den Gast, der aus nächster Nähe dem Koch bei der Zubereitung schmackhafter Speisen zuschauen kann. Der Flächengrill weist eine Heizplatte aus nichtrostendem Stahl auf, auf der in unterschiedlichen Bereichen Speisen gegrillt, gebraten und warm gehalten werden. Die Heizplatte eines solchen Flächengrills ist üblicherweise einstückig ausgebildet und an der Unterseite mit wenigstens einer Heizquelle versehen. Praktisch wäre es, eine solche Heizplatte als Induktionsgrillplatte auszubilden, zweckmäßig als eine induktionsfähige Mehrschichtplatte. Wegen der guten Wärmeleitung einer solchen Mehrschichtplatte ließen sich die verschiedenen Arbeitsbereiche aber schlecht voneinander trennen. Es ist daher bereits daran gedacht worden, mehrere kleine Mehrschichtplatten zu einer größeren Mehrzweckarbeitsplatte zu verschweißen. Bei solchen Mehrschichtplatten bestehen aber die beiden Deckschichten üblicherweise aus nichtrostendem Stahl, der beim Schweißen Probleme bereitet. Außerdem sind solche Mehrschichtplatten kaum verformbar.

Aufgabe der Erfindung ist es, eine Mehrzweckarbeitsplatte der eingangs genannten Art zu schaffen, bei der sich in der Platte verschiedene Arbeitsbereiche in Bezug auf die Wärmeleitung auf einfache Weise von dem übrigen Teil der Platte abgrenzen lassen.

Diese Aufgabe ist erfindungsgemäß bei einer Mehrzweckarbeitsplatte der eingangs genannten Art mit den im Patentanspruch 1 angegebenen Merkmalen gelöst.

Bei der Mehrzweckarbeitsplatte nach der Erfindung lassen sich die Arbeitsbereiche von dem übrigen Teil der Platte einfach dadurch abgrenzen, dass in den Grenzzonen unter der obersten Schicht der aus Mehrschichtmaterial bestehenden Mehrschichtplatte weitere Schichten nicht oder nicht mehr vorhanden sind. Erfindungsgemäß sind dabei in den Arbeitsbereichen unter der obersten Schicht die weiteren metallischen Schichten vorhanden. Das Wärmeleitungsproblem zu benachbarten Arbeitsbereichen wird dadurch erheblich verringert, weil benachbarte Arbeitsbereiche, die aus den metallischen Schichten des Mehrschichtmaterials der Mehrschichtplatte gebildet sind, nur noch durch die oberste Schicht der Mehrschichtplatte miteinander verbunden sind. Schweißprobleme treten auch nicht auf, da an der Mehrzweckarbeitsplatte überhaupt nicht geschweißt zu werden braucht.

Vorteilhafte Ausgestaltungen der Erfindung bilden die Gegenstände der Unteransprüche.

Wenn in einer Ausgestaltung der Mehrzweckarbeitsplatte nach der Erfindung in jeder Grenzzone die oberste Schicht durch Biegen, Kanten, Tiefziehen oder Prägen verformt ist, ist jeder Arbeitsbereich von benachbarten Arbeitsbereichen auf einfache Weise abgrenzt. Die Arbeitsbereiche können einen erhöhten Rand haben, damit in den einzelnen Arbeitsbereichen gleichzeitig unterschiedlichste Koch- oder Grillvorgänge ohne gegenseitige Beeinflussung stattfinden können.

Wenn in weiterer Ausgestaltung der Mehrzweckarbeitsplatte nach der Erfindung die Grenzzonen zwischen benachbarten Arbeitsbereichen so verformt sind, dass die Arbeitsbereiche in höhenmäßig versetzten Ebenen liegen, lässt sich die Mehrschichtarbeitsplatte unterschiedlichsten Anforderungen anpassen, und das wiederum ohne jegliche Schweißarbeiten.

Wenn in einer weiteren Ausgestaltung der Mehrzweckarbeitsplatte nach der Erfindung die Grenzzonen so verformt sind, dass jeder Arbeitsbereich von einem erhöhten Rand umgeben ist, kann sich in jedem Arbeitsbereich Flüssigkeit gesondert sammeln.

Wenn in einer weiteren Ausgestaltung der Mehrzweckarbeitsplatte nach der Erfindung unter wenigstens einem der Arbeitsbereiche eine Energiequelle zum Heizen oder Kühlen des Arbeitsbereiches angebracht ist, lässt sich die Mehrzweckarbeitsplatte für unterschiedliche Arbeiten optimal nutzen.

Wenn in einer weiteren Ausgestaltung der Mehrzweckarbeitsplatte nach der Erfindung die Grenzzonen gebildet sind durch spanabhebendes Abtragen von jeder unterhalb der obersten Schicht gelegenen weiteren Schicht der Mehrschichtplatte, lassen sich die einzelnen Arbeitsbereiche auf einfache Weise herstellen, indem beispielsweise die Schichten unterhalb der obersten Schicht in den betreffenden Grenzzonen einfach durch Fräsen entfernt werden. So werden auf einfache Weise die genannten Schweißprobleme vermieden.

Wenn in einer weiteren Ausgestaltung der Mehrzweckarbeitsplatte nach der Erfindung die Grenzzonen gebildet sind durch Aufbringen von weiteren Schichten auf die Unterseite der obersten Schicht nur in dem Gebiet außerhalb der Grenzzonen, lässt sich auch noch der Fräsvorgang einsparen. In diesem Fall braucht lediglich bereits beim Hersteller die Mehrzweckarbeitsplatte so hergestellt zu werden, dass ein mehrschichtiger Aufbau nur dort vorhanden ist, wo Arbeitsbereiche benötigt werden.

Ausführungsbeispiele der Erfindung werden im Folgenden unter die Bezugnahme auf die Zeichnungen näher beschrieben. Es zeigt
- Fig. 1: eine Teilquerschnittansicht einer Mehrzweckarbeitsplatte, die zwei höhenmäßig versetzte Arbeitsbereiche aufweist,
- Fig. 2: eine Teilquerschnittansicht einer Mehrzweckarbeitsplatte, bei der ein Arbeitsbereich auf einer Seite einen erhöhten Rand aufweist,
- Fig. 3: eine Teilquerschnittansicht einer Mehrzweckarbeitsplatte, bei welcher ein Arbeitsbereich auf zwei Seiten einen erhöhten Rand aufweist,
- Fig. 4: eine Teilquerschnittansicht einer Mehrzweckarbeitsplatte, bei der ein Arbeitsbereich an der Unterseite mit einer Energiequelle versehen ist,
- Fig. 5: in Draufsicht eine Mehrzweckarbeitsplatte nach der Erfindung, die drei abgegrenzte Arbeitsbereiche aufweist, von denen zwei beheizt sind und einer gekühlt ist, und
- Fig. 6: die Mehrzweckarbeitsplatte nach Fig. 4 in Draufsicht.

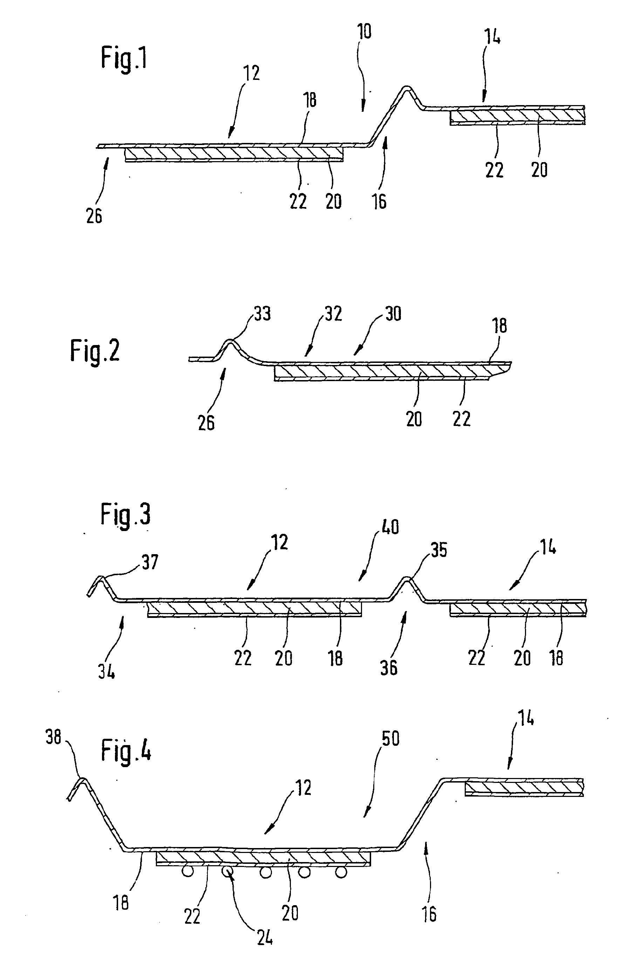

Fig. 1 zeigt in einer Teilquerschnittansicht eine insgesamt mit 10 bezeichnete Mehrzweckarbeitsplatte für einen Herd oder Grill, beispielsweise für einen Flächengrill der eingangs beschriebenen Art. Die Mehrzweckarbeitsplatte 10 besteht aus einer großen Mehrschichtplatte und weist zwei Arbeitsbereiche 12, 14 auf, die von dem übrigen Teil der Mehrschichtplatte 10 durch eine Grenzzone 16 funktional getrennt sind. Die Arbeitsbereiche 12, 14 sind als Teile der großen Mehrschichtplatte ausgebildet, bei der es sich um eine herkömmliche Mehrschichtplatte handelt, wie sie gemäß dem Dokument DE 201 16 711 U als Induktionsgrillplattte und für einen damit hergestellten Induktionsgrill eingesetzt wird. Die Mehrschichtplatte und jeder Teil derselben, der in den Arbeitsbereichen vorhanden ist, hat eine dicke Zwischenschicht 20 aus gut wärmeleitfähigem Material, hier Aluminium, zwischen zwei wesentlich dünneren Deckschichten 18, 22 aus nichtrostendem Stahl. Wenigstens eine der beiden Deckschichten 18, 20 besteht aus ferritischem Stahl, also aus einem Werkstoff, der gut magnetisierbar ist. Die andere Deckschicht kann aus austenitischem Stahl bestehen, also aus einem Werkstoff, der nur gering magnetisierbar ist. Vorzugsweise bestehen aber beide Deckschichten 18, 22 aus ferritischem Stahl. Ebenso wie bei der Induktionsgrillplatte nach dem vorgenanntem Gebrauchsmuster ist an der Unterseite der Mehrzweckarbeitsplatte unter dem Arbeitsbereich 12 eine flache Induktionsspule als Energiequelle 24 (Fig. 4) angeordnet. Statt der Induktionsspule kann als Energiequelle 24 auch eine Kühlquelle vorgesehen sein, so dass der Arbeitsbereich zum Kühlen eingesetzt werden kann.

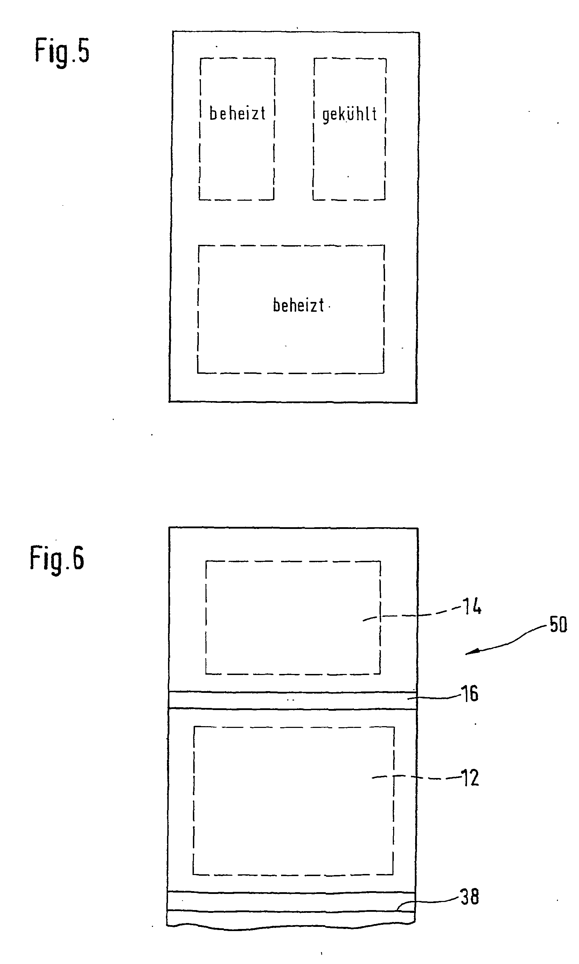

Durch die Wahl der Energiequelle 24 als Heizquelle oder Kühlquelle lassen sich die Arbeitsbereiche beheizt bzw. gekühlt ausführen, wie es beispielshalber in Fig. 5 gezeigt ist.

Die Mehrzweckarbeitsplatte, wie sie in den Fig. 1 bis 4 gezeigt ist, ist in den oben beschriebenen Fällen von Haus aus eine durchgehende große Mehrschichtplatte gewesen. Bei dieser sind nach der Herstellung in der Grenzzone 16 und in einer Grenzzone 26 die Schichten 20 und 22 unterhalb der oberen Schicht oder Deckschicht 18 durch Fräsen entfernt worden. Dadurch hat die Mehrzweckarbeitsplatte in den Grenzzonen 16 und 26 einen breiten Bereich erhalten, der aus dünnem Blech besteht. In der Grenzzone 16 ist das Blech durch Kanten oder Tiefziehen so verformt worden, wie es in Fig. 1 gezeigt ist.

Fig. 2 zeigt eine Teilquerschnittansicht einer Mehrzweckarbeitsplatte 30, bei der ein Arbeitsbereich 32 auf der linken Seite die Grenzzone 26 hat, in welcher unter der obersten Schicht 18 die weiteren Schichten 20, 22 der ursprünglichen Mehrschichtplatte nicht mehr vorhanden sind. Die Schichten 20, 22 können dabei wie zuvor nach dem Herstellen der Mehrschichtplatte durch Fräsen od. dgl. abgetragen worden sein. Bei allen hier beschriebenen Ausführungsbeispielen der Mehrzweckarbeitsplatte ist es aber auch möglich, die Schichten 20, 22 auf die Unterseite der obersten Schicht 18 nur in dem Gebiet außerhalb der Grenzzonen aufzubringen, was bereits bei dem Hersteller der Mehrzweckarbeitsplatte erfolgen kann.

Bei dem in Fig. 3 dargestellten Ausführungsbeispiel hat eine Mehrzweckarbeitsplatte 40 wie die Mehrzweckarbeitsplatte 10 zwei Arbeitsbereiche 12, 14, von welchen der Arbeitsbereich 12 auf zwei Seiten einen erhöhten Rand 35, 37 aufweist. In dem Ausführungsbeispiel nach Fig. 2 ist zur Herstellung eines erhöhten Randes 33 in der Grenzzone 26 die obere Schicht 18 durch Prägen verformt worden. In dem Ausführungsbeispiel nach Fig. 3 ist in Grenzzonen 34, 36 die obere Schicht 18 wie bei dem Ausführungsbeispiel nach Fig. 1 durch Kanten oder Tiefziehen verformt worden.

Fig. 4 zeigt ein Ausführungsbeispiel einer Mehrzweckarbeitsplatte 50, die wie die Mehrzweckarbeitsplatte 10 nach Fig. 1 zwei Arbeitsbereiche 12, 14 hat, die durch eine Grenzzone 16 von einander abgegrenzt sind. Außerdem sind die beiden Arbeitsbereiche 12, 14 wie in der Ausführungsform nach Fig. 1 höhenmäßig gegeneinander versetzt. Zusätzlich ist in dem Arbeitsbereich 12 an der Unterseite der Mehrzweckarbeitsplatte die bereits erwähnte Energiequelle 24 angebracht, bei der es sich um eine Induktionsspule, um eine Widerstandsheizschlange oder um eine Kühlschlange handeln kann. In Fig. 4 links hat die Mehrzweckarbeitsplatte 50 einen erhöhten Rand 38, der durch Kanten, Biegen oder Tiefziehen der obersten Schicht 18 hergestellt worden ist. In Fig. 6 ist die Mehrzweckarbeitsplatte nach Fig. 4 in Draufsicht gezeigt.

## Patentansprüche

1. Mehrzweckarbeitsplatte (10, 30, 40, 50) für einen Herd oder Grill, mit einer Mehrschichtplatte mit mehreren aufeinander befestigten metallischen Schichten (18, 20, 22), von denen wenigstens die oberste Schicht (18) aus Blech besteht, wobei in der Mehrschichtplatte mehrere begrenzte Arbeitsbereiche (12, 14, 32) gebildet sind, die von einander durch Grenzzonen (16, 26, 34, 36) getrennt sind, in welchen von den metallischen Schichten (18, 20, 22) nur oder nur noch die oberste Schicht (18) aus Blech vorhanden ist, **dadurch gekennzeichnet, dass** in den Arbeitsbereichen (12, 14, 32) unter der obersten Schicht (18) die weiteren metallischen Schichten (20, 22) vorhanden sind.

2. Mehrzweckarbeitsplatte nach Anspruch 1, **dadurch gekennzeichnet, dass** in den Grenzzonen (16, 26, 34, 36) die oberste Schicht (18) durch Biegen, Kanten, Tiefziehen oder Prägen verformt ist.

3. Mehrzweckarbeitsplatte nach Anspruch 2, **dadurch gekennzeichnet, dass** die Grenzzonen (16) zwischen benachbarten Arbeitsbereichen (12, 14) so verformt sind, dass die Arbeitsbereiche (12, 14) in höhenmäßig versetzten Ebenen liegen.

4. Mehrzweckarbeitsplatte nach Anspruch 2, **dadurch gekennzeichnet, dass** die Grenzzonen (16, 26, 34, 36) so verformt sind, dass jeder Arbeitsbereich (12, 14, 32) von einem erhöhten Rand (33, 35, 37, 38) umgeben ist.

5. Mehrzweckarbeitsplatte nach einem der Ansprüche 1 bis 4, **dadurch gekennzeichnet, dass** unter wenigstens einem der Arbeitsbereiche (12, 14) eine Energiequelle (24) zum Heizen oder Kühlen des Arbeitsbereiches angebracht ist.

6. Mehrzweckarbeitsplatte nach einem der Ansprüche 1 bis 5, **dadurch gekennzeichnet, dass** die Grenzzonen (16, 26, 34) gebildet sind durch spanabhebendes Abtragen von jeder unterhalb der obersten Schicht (18) gelegenen weiteren metallischen Schicht (20, 22) der Mehrschichtplatte.

7. Mehrzweckarbeitsplatte nach einem der Ansprüche 1 bis 5, **dadurch gekennzeichnet, dass** die Grenzzonen (16, 26, 34, 36) gebildet sind durch Aufbringen von weiteren metallischen Schichten (20, 22) auf die Unterseite der obersten Schicht (18) nur in dem Gebiet außerhalb der Grenzzonen (16, 26, 34, 36).

## Claims

1. A multipurpose work top (10, 30, 40, 50) for a cooker or grill, with a multilayer plate having several metallic layers (18, 20, 22) fastened to each other in superposition, of which at least the topmost layer (18) is made of sheet metal, there being formed in said multilayer plate several defined work zones (12, 14, 32) separated from one another by boundary zones (16, 26, 34, 36), in which only the topmost sheet metal layer (18) of the metallic layers (18, 20, 22) exists or is maintained, **characterized in that** the further metallic layers (20, 22) are provided in the work zones (12, 14, 32) beneath the topmost layer (18).

2. The multipurpose work top according to claim 1, **characterized in that** in the boundary zones (16, 26, 34, 36) the topmost layer (18) is deformed by bending, flanging, deep-drawing or embossing.

3. The multipurpose work top according to claim 2, **characterized in that** the boundary zones (16) between adjacent work zones (12, 14) are deformed in such a way that the work zones (12, 14) lie at different levels.

4. The multipurpose work top according to claim 2, **characterized in that** the boundary zones (16, 26, 34, 36) are deformed in such a way that each work zone (12, 14, 32) is surrounded by a raised edge (33, 35, 37, 38).

5. The multipurpose work top according to any one of the claims 1 to 4, **characterized in that** an energy source (24) for heating or cooling the work zone is provided beneath at least one of the work zones (12, 14).

6. The multipurpose work top according to any one of the claims 1 to 5, **characterized in that** the boundary zones (16, 26, 34) are formed by a machining process removing each further metallic layer (20, 22) lying beneath the topmost layer (18) of the multilayer plate.

7. The multipurpose work top according to any one of the claims 1 to 5, **characterized in that** the boundary zones (16, 26, 34, 36) are formed by applying further metallic layers (20, 22) to the undersurface of the topmost layer (18) only in the region outside the boundary zones (16, 26, 34, 36).

## Revendications

1. Plan de travail polyvalent (10, 30, 40, 50) pour une cuisinière ou un gril, comprenant une plaque multicouche avec plusieurs couches métalliques (18, 20, 22) fixées les unes sur les autres, dont au moins la couche supérieure (18) est en tôle, dans lequel dans la plaque multicouche, plusieurs zones de travail délimitées (12, 14, 32) sont formées qui sont séparées les unes des autres par des zones limites (16, 26, 34, 36), dans lesquelles il existe parmi les couches métalliques (18, 20, 22) seule la couche supérieure (18), ou il n'en existe plus que celle-ci, en tôle, **caractérisé en ce que** dans les zones de travail (12, 14, 32), au-dessous de la couche supérieure (18), il existe les autres couches métalliques (20, 22).

2. Plan de travail polyvalent selon la revendication 1, **caractérisé en ce que** dans les zones limites (16, 26, 34, 36), la couche supérieure (18) est façonnée par cintrage, biseautage, emboutissage profond ou matriçage.

3. Plan de travail polyvalent selon la revendication 2, **caractérisé en ce que** les zones limites (16) entre des zones de travail voisines (12, 14) sont façonnées de telle sorte que les zones de travail (12, 14) se trouvent dans des plans décalés en hauteur.

4. Plan de travail polyvalent selon la revendication 2, **caractérisé en ce que** les zones limites (16, 26, 34, 36) sont façonnées de telle sorte que chaque zone de travail (12, 14, 32) est entourée d'un bord rehaussé (33, 35, 37, 38).

5. Plan de travail polyvalent selon l'une quelconque des revendications 1 à 4, **caractérisé en ce qu'**au-dessous d'au moins l'une des zones de travail (12, 14), une source d'énergie (24) est installée pour chauffer ou refroidir la zone de travail.

6. Plan de travail polyvalent selon l'une quelconque des revendications 1 à 5, **caractérisé en ce que** les zones limites (16, 26, 34) sont formées par enlèvement de copeaux de chaque couche métallique supplémentaire (20, 22) de la plaque multicouche, située au-dessous de la couche supérieure (18).

7. Plan de travail polyvalent selon l'une quelconque des revendications 1 à 5, **caractérisé en ce que** les zones limites (16, 26, 34, 36) sont formées par application de couches métalliques supplémentaires (20, 22) sur le côté inférieur de la couche supérieure (18) uniquement dans la région en dehors des zones limites (16, 26, 34, 36).
